(19) Europäisches Patentamt
European Patent Office
Office européen des brevets

(11) **EP 1 493 522 B1**

(12) **FASCICULE DE BREVET EUROPEEN**

(45) Date de publication et mention de la délivrance du brevet:
**14.03.2007 Bulletin 2007/11**

(51) Int Cl.:
***B23H 1/02*** *(2006.01)*

(21) Numéro de dépôt: **02012169.5**

(22) Date de dépôt: **03.06.2002**

(54) **Dispositif d'usinage par électroérosion**

Funkenerosionsmaschine

Apparatus for electric discharge machining

(84) Etats contractants désignés:
**AT BE CH CY DE DK ES FI FR GB GR IE IT LI LU MC NL PT SE TR**

(43) Date de publication de la demande:
**05.01.2005 Bulletin 2005/01**

(73) Titulaire: **CHARMILLES TECHNOLOGIES S.A.**
**1217 Meyrin 1 (CH)**

(72) Inventeurs:
- **Martin, Roland**
  **74520 Dingy-en-Vuache (FR)**
- **Dorthe, Sebastian**
  **1608 Chesalles sur Oron (CH)**
- **Tognolini, Maurizio**
  **1269 Bassins (CH)**

(74) Mandataire: **Micheli & Cie SA**
**Rue de Genève 122,**
**Case Postale 61**
**1226 Genève-Thonex (CH)**

(56) Documents cités:
**US-A- 3 832 510** **US-B1- 6 392 183**

- **PATENT ABSTRACTS OF JAPAN vol. 010, no. 021 (M-449), 28 janvier 1986 (1986-01-28) & JP 60 180720 A (FANUC KK), 14 septembre 1985 (1985-09-14)**
- **PATENT ABSTRACTS OF JAPAN vol. 013, no. 415 (M-870), 13 septembre 1989 (1989-09-13) & JP 01 153220 A (MITSUBISHI ELECTRIC CORP), 15 juin 1989 (1989-06-15)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

EP 1 493 522 B1

## Description

La présente invention concerne un dispositif d'usinage par électroérosion comprenant un circuit électrique avec une source de tension connectée à un réseau d'alimentation, agencé de façon à produire des impulsions de courant dans un circuit de charge comprenant une électrode-outil et une électrode-pièce constituant les pôles opposés d'une fente de travail en série avec au moins un élément de self-induction. Un tel dispositif est connu du document JP-A-01153220 qui décrit l'état de la technique le plus proche.

De tels dispositifs sont généralement utilisés pour l'électroérosion par enfonçage, par fil ou par fraisage électroérosif. Cependant il est généralement nécessaire de prévoir un générateur de décharges érosives différent pour chaque application ou type d'électroérosion. Un des buts de la présente invention est de trouver un dispositif comportant l'architecture la plus simple possible et en même temps susceptible de couvrir toutes les applications d'usinage. Un tel dispositif devra permettre une industrialisation au moindre coût tout en étant applicable à l'usinage par enfonçage, par fil ou par fraisage.

Le dispositif devra en outre être adapté à pouvoir produire des décharges électroérosives dont l'évolution du courant en fonction du temps peut être contrôlée de façon précise, pouvant donc comporter une succession de différentes pentes de montée et de descente de courant. Ainsi, l'usure de l'électrode-outil pourra être diminuée de façon optimale dans le cas de l'usinage par enfonçage.

Un autre but que le dispositif devra atteindre est la suppression des dissipations par résistances de ballast de l'énergie stockée temporairement dans des boucles à self-inductance. Il est souhaitable d'éliminer ces résistances de ballast complexes et coûteuses; en effet il faut souvent prévoir plusieurs valeurs de résistances commutables, car la source d'énergie à dissiper n'a pas toujours une tension fixe.

Un autre but de l'invention est d'éviter de faire circuler des courants continus importants dans des boucles de stockage pendant les phases de pause et d'attente des décharges.

Ces différents buts sont réalisés par un dispositif d'usinage par électroérosion selon les revendications 1-11 qui comprend un circuit électrique comprenant la combinaison des caractéristiques suivantes :

- une source double de tension comprenant une première et une seconde source de tension reliées galvaniquement entre elles par un de leurs pôles,
- ladite source double étant reliée au circuit de charge par au moins quatre branches distinctes,
- des moyens de commutation pour produire par branchement sélectif desdites branches au moins deux pentes de courant croissantes et au moins deux pentes de courant décroissantes,
- lesdites branches étant agencées pour que l'énergie de self-induction excédentaire du circuit électrique non consommée par les décharges érosives soit renvoyée à la source double,
- des moyens de transfert étant prévus pour effectuer un transfert d'énergie entre les deux sources de tension de la source double.

Grâce à ces caractéristiques, le dispositif pourra être utilisé pour tout type d'électroérosion par enfonçage, par fil, par fraisage etc. En enfonçage, le dispositif rend possible un usinage à très faible usure de l'électrode-outil du fait que les pentes de montée et de descente du courant des impulsions électriques peuvent être programmées et contrôlées. Ce contrôle permet de donner aux impulsions de courant un profil global correspondant à chaque application d'usinage.

Chacune des deux sources peut fonctionner en qualité de source principale branchée au réseau ou de source secondaire recevant ses charges soit par le retour de courant depuis le gap ou la fente de travail et la self de ligne, soit par l'action des moyens de transfert agissant en tant que pompe de courant.

L'énergie électrique fournie par le réseau au dispositif est entièrement dévolue à l'usinage par électroérosion et les énergies excédentaires lors de l'arrêt des impulsions électriques sont renvoyées à l'une ou l'autre des deux sources, ce qui permet un fonctionnement particulièrement rationnel dans tout type d'application, donc des économies d'énergie considérables.

Aucun courant ne circule dans le circuit électrique principal destiné à la production des décharges pendant les périodes de pause et d'attente.

La pompe de courant fait office en même temps de régulateur de tension pour la source auxiliaire non reliée au réseau et permet en particulier d'ajuster cette tension en temps réel aux conditions particulières de l'usinage désiré.

Avantageusement, le dispositif comprend des moyens pour connecter soit la première, soit la seconde source de tension au réseau d'alimentation.

Ces moyens qui sont constitués par exemple par un commutateur simple ou double permettent une adaptation rapide du dispositif à une application différente.

Un mode d'exécution préféré est caractérisé par le fait que le circuit électrique est de constitution générale en demi-pont comportant,

- une première branche reliant le pôle positif de la source double par un premier interrupteur à la fente de travail,
- une seconde branche reliant la fente de travail par un second interrupteur au pôle négatif de la source double,
- une troisième branche reliant par l'intermédiaire d'un premier élément unidirectionnel la source double à une première borne du premier interrupteur dirigée du côté de la fente de travail,

- une quatrième branche reliant par l'intermédiaire d'un second élément unidirectionnel une première borne du second interrupteur dirigée du côté de la fente de travail à la source double.

Cette architecture générale du circuit électrique rend possible l'obtention aisée de deux pentes de montée de courant et de deux pentes de descente de courant permettant, par un séquencement donné des différentes pentes de courant, la réalisation de profils d'impulsion de courant variés.

De façon avantageuse la première et seconde sources de tension sont reliées l'une à l'autre par leurs pôles de même polarité formant un pôle commun.

Les deux sources possèdent ainsi un potentiel commun, ce qui permet un branchement au réseau avec une commutation simple entre les deux sources.

Favorablement un pôle de la seconde source non relié à la première source est connecté par l'intermédiaire d'un des éléments unidirectionnels à la première borne de l'interrupteur dont l'autre borne est relié au pôle commun des deux sources, pour former ladite troisième ou quatrième branche.

Selon un autre mode d'exécution très avantageux, un pôle de la seconde source non relié à la première source est connecté par l'intermédiaire d'un des éléments unidirectionnels à la première borne de l'interrupteur dont une seconde borne est reliée au pôle de la première source qui n'est pas commun avec la seconde source pour former ladite troisième ou quatrième branche.

Un mode d'exécution supplémentaire est caractérisé par le fait que les première et seconde sources sont reliées l'une à l'autre par leurs pôles de polarité opposée, et par le fait que la seconde source est connectée en série dans la première ou seconde branche à une seconde borne de l'un des interrupteurs dirigée vers la première source.

Ces trois modes d'exécution se différencient principalement par le branchement de la seconde source. Bien qu'ils permettent tous les trois d'obtenir au moins quatre pentes différentes de courant, ces pentes sont obtenues de façon différente, comme l'est également la récupération de l'énergie excédentaire dans l'une ou dans l'autre des deux sources.

Avantageusement lesdits moyens de transfert comprennent un premier circuit de transfert agencé pour transférer l'énergie de la seconde source vers la première source et par le fait que ce premier circuit de transfert comporte, d'une part, une première maille de courant composée par un accumulateur d'énergie, un troisième interrupteur et la seconde source et, d'autre part, une seconde maille de courant comprenant au moins ledit accumulateur d'énergie, un troisième élément unidirectionnel et la première source montée en récepteur d'énergie, les première et seconde mailles étant activées alternativement par la fermeture et l'ouverture du troisième interrupteur.

On obtient par ces caractéristiques une pompe unidirectionnelle présentant une structure très simple avec uniquement trois composants électroniques. Cette pompe permet de transférer des charges de la seconde vers la première source et ceci de façon indépendante du fonctionnement du circuit générateur d'impulsions proprement dit.

De façon favorable lesdits moyens de transfert comprennent un second circuit de transfert agencé pour transférer l'énergie de la première source vers la seconde source et par le fait que ce second circuit de transfert comporte, d'une part, une troisième maille de courant comprenant au moins un accumulateur d'énergie, un quatrième interrupteur et la première source et, d'autre part, une quatrième maille de courant composée par ledit accumulateur d'énergie, un quatrième élément unidirectionnel et la seconde source montée en récepteur d'énergie, les troisième et quatrième mailles étant activées alternativement par la fermeture et l'ouverture du quatrième interrupteur.

L'accumulateur d'énergie, par exemple une bobine de self-induction, pourra être commun aux premier et second circuits de transfert, ce qui permettra d'obtenir une pompe bidirectionnelle avec seulement cinq composants électroniques.

D'autres avantages ressortent des caractéristiques exprimées dans les revendications dépendantes et de la description exposant ci-après l'invention plus en détail à l'aide de dessins qui représentent schématiquement et à titre d'exemple des modes d'exécution et des variantes.

La figure 1 représente le circuit électrique schématique d'un premier mode d'exécution.

Les figures 2 à 4 illustrent des variantes.

La figure 5 montre le circuit électrique selon un second mode d'exécution.

La figure 6 représente une variante du second mode d'exécution.

La figure 7 représente le circuit électrique d'un troisième mode d'exécution.

Les figures 8 à 10 illustrent trois variantes du troisième mode d'exécution.

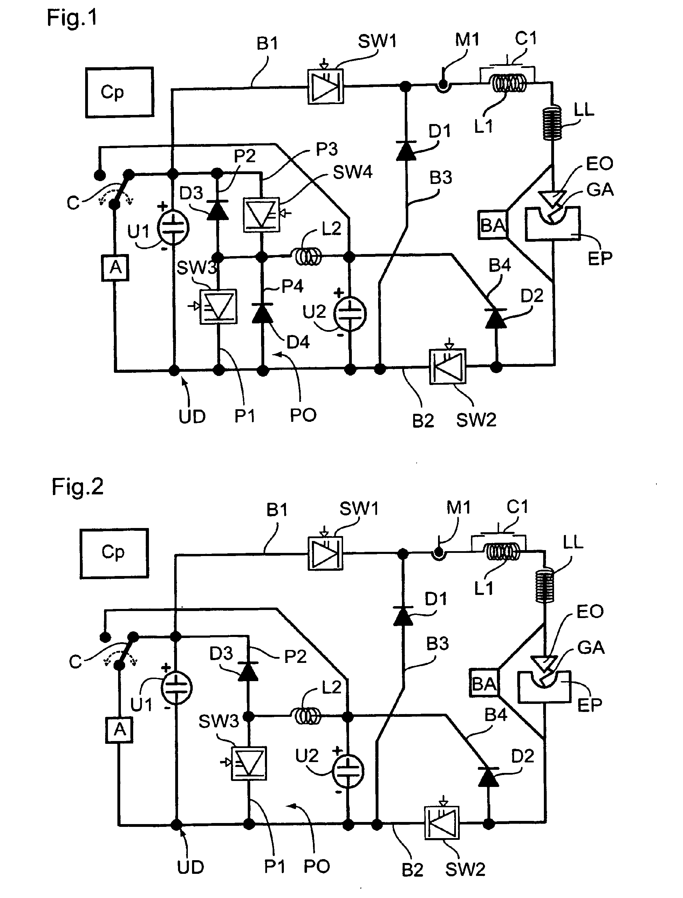

Un premier mode d'exécution du dispositif d'usinage par électro-érosion ou générateur d'impulsions électro-érosives est illustré à la figure 1 et possède un premier organe source de tension U1, ci-après première source, et un second organe source de tension U2, ci-après seconde source, formant ensemble une source double de tension UD. Les deux sources de tension U1 et U2 sont reliées galvaniquement entre elles par un de leur pôle, ici les deux pôles négatifs, pour constituer la source double de tension. Par l'intermédiaire d'un commutateur C, l'une ou l'autre des deux sources de tension peut être reliée à une alimentation électrique A, telle qu'une alimentation stabilisée en tension reliée au réseau électrique et comportant au moins un transformateur et un redresseur.

Le générateur possède quatre chemins de liaison ou branches entre la source double UD et la fente de travail ou gap GA situées entre l'électrode-outil EO et l'électrode-pièce EP à usiner.

Une première branche B1 comprend, à partir de la borne positive de la première source U1, un interrupteur SW1, un ampèremètre M1 et une bobine de self-induction L1 dont les bornes sont reliées en shunt par un commutateur C1, LL représentant l'inductance parasite de ligne du générateur.

Une seconde branche B2 relie l'électrode-pièce EP par un second interrupteur SW2 aux bornes négatives des deux sources U1, U2.

Une troisième branche B3 relie les bornes négatives des deux sources U1 et U2 par une diode D1, l'ampèremètre M1, la bobine L1 avec son shunt C1 à l'électrode-outil EO.

Finalement une quatrième branche B4 comprend une deuxième diode D2 située entre l'électrode-pièce EP et la borne positive de la deuxième source de tension U2.

Ces différentes branches en combinaison avec les moyens de commutation constituées par les deux interrupteurs SW1 et SW2 permettent de produire deux pentes croissantes différentes de courant et deux pentes décroissantes différentes, à savoir les pentes correspondantes aux chemins suivants :

No 1) montée rapide : U1, SW1, M1, L ( = L1 + LL), GA, SW2.

Les équations suivantes sont applicables :

$$UL = L \cdot di/dt = U1 - Ug \qquad (1a)$$

où

L = l'inductance combinée de la bobine L1 et de la ligne LL, L = L1 + LL;

UL = différence de potentiel aux bornes de l'inductance combinée ;

Ug = différence de potentiel aux bornes du gap;

U1 = tension aux bornes de la première source.

$$di/dt = (U1 - Ug)/L \qquad (1b)$$

No 2) montée lente : U1, SW1, M1, L, GA, D2, -U2, (SW2 étant bloqué).

Les équations suivantes sont applicables :

$$UL = L \cdot di/dt = U1 - U2 - Ug \qquad (2a)$$

U2 = tension aux bornes de la seconde source

$$di/dt = (U1 - U2 - Ug)/L \qquad (2b)$$

No 3) descente rapide : L, GA, D2, -U2, D1, M1 (SW1 et SW2 étant bloqués).

Les équations suivantes sont applicables :

$$UL = L \cdot di/dt = - U2 - Ug \qquad (3a)$$

$$di/dt = (-U2 - Ug)/L \qquad (3b)$$

No 4) descente lente : L, GA, SW2, D1, M1 (SW1 étant bloqué).

Les équations suivantes sont applicables ;

$$UL = L \cdot di/dt = -Ug \qquad (4a)$$

$$di/dt = -Ug/L \qquad (4b)$$

Il est à noter dans le cas de la figure 1 que la source U2 reçoit de l'énergie de la part de la source U1 lors de la montée lente No 2 et également reçoit l'énergie selfique excédentaire du circuit, non consommée par les décharges érosives lors de la descente rapide de courant No 3.

Le générateur illustré à la figure 1 comprend en outre des moyens de transfert pour transférer les énergies entre les deux sources U1 et U2 de la source double, communément désigné pompe de courant PO. Cette pompe de courant est dans le cas de la figure 1 bidirectionnelle, permettant donc d'envoyer des charges électriques de la source U2 à la source U1 et vice versa. Elle comprend à cet effet un premier circuit de transfert avec une première boucle P1 comportant un enroulement L2 connecté à la borne positive de la source U2 et relié à un interrupteur unidirectionnel SW3 dont la sortie est connectée à la borne négative de la source U2, et avec une seconde boucle P2 comportant l'enroulement L2 et une diode D3 reliée à la borne positive de la source U1 dont la borne négative est galvaniquement reliée à la borne négative de la source U2. En activant alternativement les boucles P1 et P2 par fermeture et ouverture de l'interrupteur SW3 avec une fréquence prédéterminée, par exemple de 200 KHZ, les charges sont transférées de la source U2 vers l'enroulement L2, et ensuite vers la source U1.

Inversement cette pompe comprend un second circuit de transfert avec une troisième boucle P3 comportant un interrupteur unidirectionnel SW4 connecté à la borne positive de la source U1 et à l'enroulement L2 et avec une quatrième boucle P4 présentant une diode D4 reliée à la borne négative de la source U2 et à l'enroulement L2 .

En activant alternativement l'interrupteur SW4, l'interrupteur SW3 étant bloqué, des charges sont transférées de la source U1 vers la source U2 par l'intermédiaire de l'enroulement L2.

Une unité de commande électronique CP réalisée selon les techniques digitales connues assume une série de tâches logiques, en particulier le pilotage de l'ouverture et de la fermeture des différents interrupteurs SW1, SW2, SW3 et SW4 et des commutateurs C et C1. Elle reçoit entre autres des signaux de mesure de l'ampèremètre M1 et de potentiomètres, non illustrés, permettant de mesurer la tension des sources U1 et U2 et le potentiel à travers le gap GA.

Le générateur comprend en outre un circuit d'amorçage BA branché en parallèle entre l'électrode-outil et l'électrode-pièce et destiné à créer une tension suffisamment élevée à travers le gap pour qu'une décharge électrique soit amorcée sous le contrôle de l'unité de commande CP.

Ainsi, le générateur décrit présente de nombreuses particularités et avantages.

Chacune des deux sources peut fonctionner en qualité de source principale ou de source secondaire selon le branchement à l'alimentation A. La source secondaire ne reçoit pas ses charges directement depuis le réseau. Elle se charge soit par les retours de courant depuis le gap et la self de ligne, soit par l'action de la pompe de courant.

Il est important qu'une source seulement dite principale soit branchée au réseau. C'est vers elle que toutes les énergies excédentaires sont renvoyées. En vertu du principe de la conservation de l'énergie, cette source principale ne reçoit en retour pas plus d'énergie que ne lui en a délivré le réseau. Par suite sa tension ne dépassera pas la tension crête donnée par l'alimentation.

Au contraire si chacune des deux sources étaient reliées au réseau, il faudrait dissiper le cas échéant l'énergie excédentaire retournée à l'aide de ballast résistifs. D'où une perte d'énergie produisant un échauffement inutile du dispositif et d'autre part une réalisation plus coûteuse en matériel.

L'énergie électrique fournie par l'alimentation au générateur est entièrement dévolue, aux pertes près, à l'usinage par électroérosion. Les pertes ohmiques restent négligeables, étant donné que le circuit proposé ne comporte en principe aucun composant résistif.

Aucun courant ne circule dans le circuit principal durant les périodes d'attente TD d'une décharge ou de pause TB entre deux décharges. Durant ces périodes, seuls des courants peuvent circuler momentanément dans les branches de la pompe PO. Toutefois, si les périodes d'attente ou de pause se prolongent, tous les courants cesseront de circuler, puisque les énergies excédentaires finiront rapidement par être stockées dans les capacités des sources U1 et U2.

Le circuit proposé ne stocke pas l'énergie électrique d'une manière permanente dans des boucles d'auto-inductance, évitant ainsi les pertes permanentes par effet Joule.

Avec une valeur donnée de self-induction dans la branche du gap, les moyens de commutation du circuit produisent deux pentes de montée et deux pentes de descente du courant. Soit une montée lente, une montée rapide, une descente lente et une descente rapide.

Ces quatre pentes de courant peuvent avantageusement être combinées séquentiellement d'une manière quelconque. Cela permet de donner aux impulsions de courant un profil global correspondant à chaque application.

Il est en outre possible d'activer la différence des tensions des deux sources. Cette particularité apporte un avantage particulier en usinage d'enfonçage. Dans ce type d'usinage, il est habituel d'appliquer une rampe de courant lente après l'amorçage de l'étincelle érosive, dans le but de réduire l'usure de l'électrode.

Dans le cas du circuit de la figure 1, la pente de descente du courant en fin de décharge érosive est d'autant plus rapide que la pente de montée est lente en début de décharge et inversement, tel que cela ressort des équations 2b et 3b.

Pour les décharges de courant dont le flanc de montée est particulièrement lent cela permet de gagner du temps pour lancer le cycle suivant, puisque le flanc de descente en est écourté.

Comme expliqué ci-dessus, la source auxiliaire ne reçoit pas ses charges directement depuis l'alimentation ou le réseau, mais se charge soit par les retours de courant depuis le gap et la self de ligne, soit par l'action de la pompe de courant.

Le fonctionnement du circuit générateur d'impulsions proprement dit et le fonctionnement de la pompe sont indépendants. Le fonctionnement de la pompe n'interfère pas sur le fonctionnement du générateur d'impulsions. Les fonctionnements de l'un et de l'autre peuvent être décrits séparément.

La pompe de courant fait office en même temps de régulateur de tension pour la source auxiliaire non reliée au réseau. La source principale étant branchée sur l'alimentation, sa tension est donc définie par la tension crête en sortie de l'alimentation. La pompe de courant permet donc en particulier d'ajuster en temps réel aux conditions particulières de l'usinage la tension de la source non reliée à l'alimentation.

L'une ou l'autre source peut être reliée à l'alimentation, la pompe de courant restant branchée d'une manière identique. On obtient donc des fonctionnements complémentaires spécifiques.

Dans un cas habituel pour une machine d'érosion par enfonçage l'alimentation donne une tension crête de sortie de 40 volts par exemple. Pour une application typique d'enfonçage on branchera la source U1 à l'alimentation. La capacité de U1 se chargera donc à 40 volts. La capacité de U2 reste vide au démarrage de l'unité. L'amorçage des décharges est réalisé par le circuit d'allumage BA bien connu branché en parallèle sur le gap.

Dès le premier amorçage, la première rampe de courant ascendant est obtenue en rendant SW1 conducteur et en verrouillant SW2. Le courant emprunte le chemin No 2, montée lente, soit U1, SW1, M1, L, GA, D2, -U2 et commence à charger U2.

Lorsque le courant mesuré par M1 atteint la valeur de consigne maximum, SW2 restant conducteur, SW1 est verrouillé; le courant décroît lentement en empruntant le chemin No 4, descente lente, soit L, GA, SW2, D1, M1.

Pour maintenir un palier de courant approximativement constant les chemins No 2 et No 4 sont commutés en alternance selon un mode en dents de scie bien connu.

Lorsque le moment d'interrompre la décharge érosive est venu SW1, et SW2 sont verrouillés et le courant dans le gap entame une rampe de descente rapide en empruntant le chemin No 3, soit L, GA, D2, -U2, D1, M1.

Finalement, lorsque SW1 et SW2 sont rendus conducteurs, on produit une rampe de montée rapide du courant, soit le chemin No 1 (U1, SW1, M1, L, GA, SW2) lequel peut être utilisé, suivi du chemin No 3, ceci en début de décharge et en cas de court-circuit afin de produire un effet anti-court-circuit.

En empruntant les chemins No 3 et No 2, le courant charge la source U2 initialement vide. Après une centaine de décharges érosives, U2 est chargée à une valeur régulée de tension, par exemple 15 volts, que la pompe de courant (L2, D3, SW3) va maintenir en évacuant les charges excédentaires vers la source U1; ceci en commutant alternativement les chemins de courant P1 et P2.

Dès que la source U2 s'est chargée à une tension régulée de 15 volts, il devient possible de produire des rampes de montée du courant très lentes lorsque le chemin No 2 est activé. En effet, la force électro-motrice résultante appliquée au gap n'est plus que de 25 volts.

A noter ici que si l'on verrouille continuellement l'interrupteur SW3, la source U1 étant reliée au réseau d'alimentation A par le commutateur C, la pompe de courant reste inopérante et la source auxiliaire U2 monte jusqu'à la tension de la source principale U1, restituant ainsi le fonctionnement d'un circuit habituel dit en ½ pont et ne comportant qu'une seule source.

Dans l'autre mode de branchement de la figure 1, la source U2 est reliée au réseau. Dans ce cas, la pompe de courant (L2, D3, SW3) peut faire monter la tension de la source U1 à une valeur aussi élevée que les composants le permettent. Par exemple supérieure à 300 V. Un tel pilotage est typique des usinages par électroérosion de découpe par fil où l'on produit des impulsions triangulaires ou trapézoïdales à pentes très raides.

On voit donc que les modèles de circuits proposés permettent chacun de couvrir l'ensemble des applications de l'électroérosion.

Les interrupteurs ou contacteurs statiques sont des semi-conducteurs commutables à l'ouverture et à la fermeture, tels que Mosfet, transistors bipolaires, IGBT (ignition gate bipolar transistor), GTO (gate turn off), etc.

Les tensions de sources utilisées couramment en enfonçage vont de 20 volts à 80 volts, 60 volts à 500 volts pour les usinages à fil.

Les sources sont essentiellement constituées d'une capacité allant de 200 à 5000 Micro-farads.

La source dite principale n'est en principe pas régulée, sa tension est fixée par la tension crête de sortie du pont redresseur de l'alimentation A.

La source secondaire comporte un potentiomètre non représenté sur les schémas: elle est régulée par la pompe de courant en fonction du rapport cyclique d'ouverture/fermeture de l'interrupteur et de la fréquence de commutation.

La self de la ligne LL est de l'ordre de 0,5 à 3 Micro-Henry. En série avec cette self on peut brancher une bobine de self-induction L1 additionnelle par exemple 5 à 20 Micro-Henry pour générer les rampes de montée lentes de courant en mode d'enfonçage, la valeur de 20 $\mu$H étant réservée pour les valeurs basses des courants de décharge afin de réduire l'amplitude d'oscillation du courant lorsque la valeur de consigne est atteinte.

A la figure 2 est représentée une variante d'exécution du premier mode d'exécution.

Cette variante diffère de ce dernier uniquement par le dispositif pour échanger les énergies entre les deux sources ou pompe de courant PO. Cette dernière est ici simplifiée et réalisée grâce à la connexion directe de seulement trois composants, à savoir la diode D3, l'enroulement L2 et l'interrupteur SW3 formant les deux boucles P1 avec l'interrupteur SW3 et P2 avec la diode D3. Le transfert d'énergie direct entre les deux sources ne peut alors être effectué que dans un seul sens, de la source U2 vers la source U1.

Pour réaliser le transfert dans l'autre sens, il est possible d'exploiter le stockage indirect d'énergie dans la self de ligne LL et dans l'enroulement L1 en série avec le gap, en faisant circuler le courant dans les chemins No 2, montée lente et No 3 descente rapide parcourant la source U2 à l'envers. Malgré la simplicité de cette pompe à trois composants, les deux sources U1 et U2 peuvent donc échanger leurs énergies dans les deux sens.

Le circuit générateur d'impulsions proprement dit est identique à celui de la figure 1; son fonctionnement et les quatre chemins de courant No 1 à No 4 sont donc identiques.

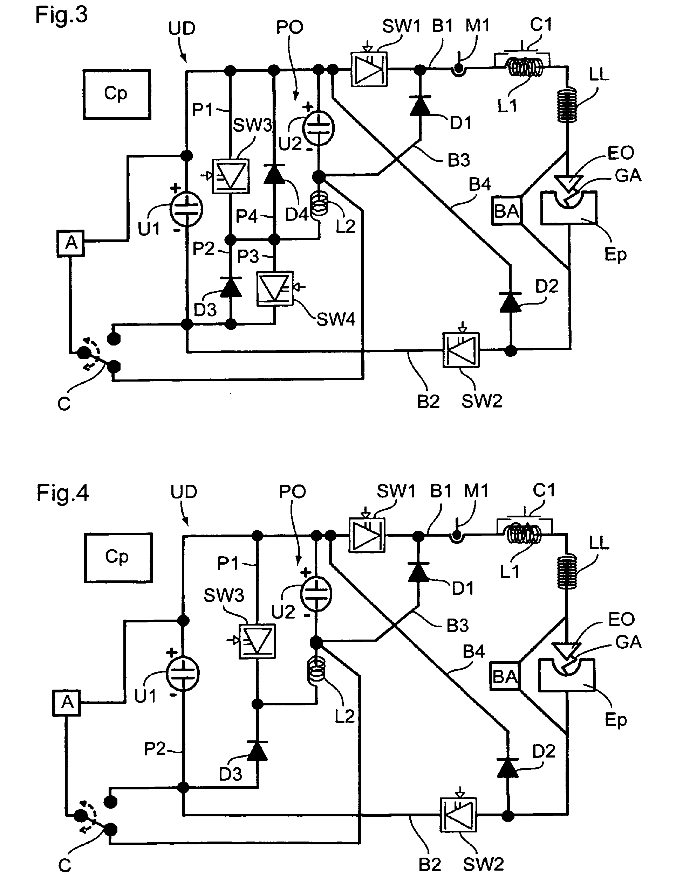

Les deux variantes représentées aux figures 3 et 4 possèdent des circuits électriques symétriques à ceux des figures 1 et 2, les deux sources U1 et U2 étant cependant reliées par leurs bornes positives pour former la source double de tension UD. Par l'intermédiaire du commutateur C, l'une ou l'autre des deux sources U1 ou U2 peut être reliée à l'alimentation A.

On dénombre également quatre branches entre la source double UD et le gap GA, à savoir :

- la branche B1 : U1, SW1, M1, L, EO
- la branche B2 : EP, SW2, U1
- la branche B3 : U2, D1, M1, L, EO
- la branche B4 : EP, D2, U2.

Les deux circuits des figures 3 et 4 permettent également de produire les quatre chemins de courant suivants :

No 1) montée rapide : U1, SW1, M1, L (=L1 + LL), GA, SW2,

No 2) montée lente : U1, -U2, D1, M1, L, GA, SW2 (SW1 étant bloqué),

No 3) descente rapide : L, GA, D2, -U2, D1, M1 (SW1 et SW2 étant bloqués),

No 4) descente lente : L, GA, D2, SW1, M1 (SW2 étant bloqué).

Le circuit de la figure 3 comprend une pompe de courant PO bidirectionnelle permettant donc d'envoyer des charges électriques de la source U2 à la source U1 et vice-versa.

Cette pompe de courant comprend une première boucle P1 avec U2, SW3, L2 et une seconde boucle P2 avec U2, -U1, D3, L2 pour transférer l'énergie de la source U2 vers la source U1, ainsi qu'une troisième boucle P3 avec U1, -U2, L2, SW4 et une quatrième boucle P4 avec L2, D4, -U2 pour transférer l'énergie de la source U1 vers la source U2.

Le fonctionnement et les particularités du circuit générateur d'impulsions proprement dit et de la pompe de courant bidirectionnelle de la figure 3 sont identiques à ceux de la figure 1.

La variante de générateur illustrée à la figure 4 est identique à celle de la figure 3, si ce n'est que la pompe de courant PO est simplifiée et comprend uniquement la première boucle P1 avec U2, SW3, L2 et la seconde boucle P2 avec U2, -U1, D3, L2 pour transférer l'énergie de la source U2 vers la source U1.

Le transfert d'énergie de U1 vers U2 est obtenu en faisant circuler le courant dans les chemins No 2, montée lente et No 3 descente rapide.

Le fonctionnement et les caractéristiques du circuit générateur d'impulsions proprement dit de la variante de la figure 4 sont identiques à ceux de la figure 3.

Il est à souligner que les circuits générateurs d'impulsions représentés aux figures 1 à 4 correspondent tous à des circuits à demi-pont dont une des branches croisées B4 ou B3 à diode D2 ou D1 a été rompue pour être reconnectée en parallèle avec l'interrupteur voisin SW2 ou SW1 au moyen de la seconde source U2 à la branche B2 ou B1 dont elle est issue.

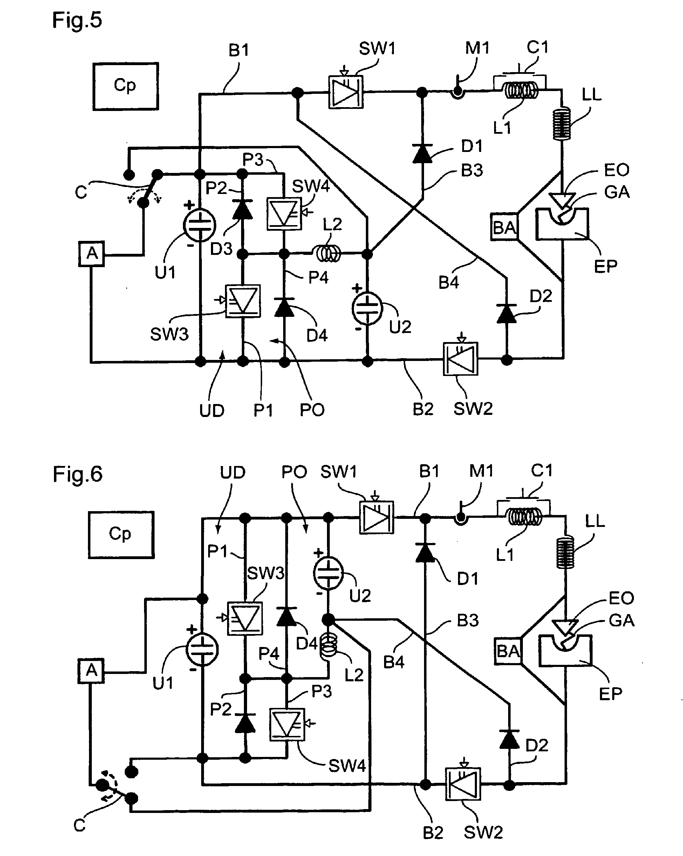

Le deuxième mode d'exécution représenté à la figure 5 comprend également un circuit générateur d'impulsion en demi-pont. Cependant la seconde source U2 est ici intégrée dans une B3 des branches croisées du demi-pont.

Ce circuit comprend donc une première branche B1 qui relie la source double UD avec la première et seconde source U1, U2 au gap GA entre l'électrode-outil EO et l'électrode-pièce EP et qui comporte le premier interrupteur SW1, l'ampèremètre M1, la bobine de self-induction L1 dont les bornes sont reliées par un commutateur C1 et la self de ligne LL.

Le circuit possède une seconde branche B2 avec l'interrupteur SW2 reliant l'électrode-pièce EP aux bornes négatives communes des deux sources U1, U2, une troisième branches B3 avec la diode D1, l'ampèremètre M1 et la bobine L1 avec son shunt C1 et une quatrième branche B4 avec la diode D2.

Les deux interrupteurs SW1 et SW2 permettent de produire les chemins de courant suivants :

No 1) montée rapide : U1, SW1, M1, L (=L1 +LL), GA, SW2.
avec une pente de courant di/dt = (U1 - Ug)/L (5).

No 2) montée lente : U2, D1, M1, L, GA, SW2 (SW1 étant bloqué).
avec une pente de courant di/dt = (U2 - Ug)/L (6)

No 3) descente rapide : L, GA, D2, -U1, U2, D1, M1 (SW1 et SW2 étant bloqués)
avec une pente de courant di/dt = (U2 - U1 -Ug)/L (7)

No 4) descente lente : L, GA, D2, SW1, M1 (SW2 étant bloqué)
avec une pente de courant di/dt = - Ug/L (8)

On obtient donc deux pentes différentes de montée de courant et deux pentes différentes de descente de courant. L'énergie selfique excédentaire du circuit non consommée par les décharges érosives est renvoyée à la source double UD, ici en particulier à la source U1 lors de la descente rapide en empruntant le chemin de courant No 3). Une pompe de courant PO bidirectionnelle permet d'échanger l'énergie entre la source U1 et U2 et vice-versa. La constitution et le fonctionnement de cette pompe sont identiques à ceux de la pompe de la figure 1.

Lorsque dans ce deuxième mode d'exécution la première source U1 est reliée à l'alimentation, la seconde source U2 ne peut être chargée que par le fonctionnement de la pompe de courant PO.

Le générateur illustré à la figure 6 constitue une variante du mode d'exécution de la figure 5 du fait que son circuit est symétrique à celui de la figure 5, les deux sources U1 et U2 étant ici reliées par leurs bornes positives pour former la source double de tension Ud. L'une et l'autre des sources U1 ou U2 peut être reliée à l'alimentation A grâce au commutateur C.

Le circuit de la figure 6, variante symétrique à celui de la figure 5, permet de produire les quatre chemins de courant et les quatre pentes de courant suivantes :

No 1) montée rapide : U1, SW1, M1, L, GA, SW2.

$$di/dt = (U1 - Ug)/L \quad (5)$$

No 2) montée lente : U2, SW1, M1, L, GA, D2 (SW2 étant bloqué)

$$di/dt = (U2 - Ug)/L \quad (6)$$

No 3) descente rapide : L, GA, D2, U2, -U1, D1, M1 (SW1 et SW2 étant bloqués)

$$di/dt = (U2 - U1 - Ug)/L \quad (7)$$

No 4) descente lente : L, GA, SW2, D1, M1 (SW1 étant bloqué)

$$di/dt = - Ug/L \quad (8).$$

Les pentes des deux montées et descentes du circuit de la figure 6 sont donc identiques à celles du circuit de la figure 5.

La pompe de courant PO qui est bidirectionnelle est identique à celle décrite en référence à la figure 3. Elle permet en particulier d'envoyer des charges électriques de la source U1 vers la source U2 qui ne peut être chargée que par le fonctionnement de la pompe de courant, lorsque la source U1 est reliée à l'alimentation.

Dans une variante simplifiée cette pompe de courant des figures 5 et 6 pourrait être unidirectionnelle et ne comporter que les composants L2, SW4 et D4 pour transférer les charges de la source U1 vers la source U2.

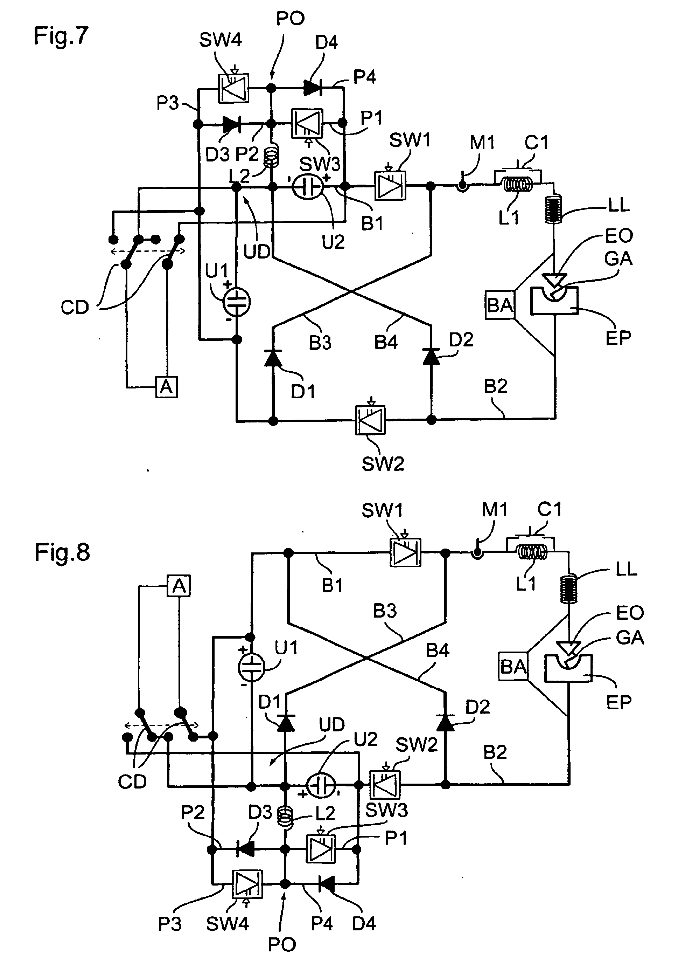

Un troisième mode d'exécution représenté à la figure 7 comprend une source double UD de tension comportant une première source U1 dont la borne positive est connectée en série à la borne négative d'une seconde source U2. L'une ou l'autre des deux sources U1 ou U2 peut être connectée à l'alimentation A grâce au commutateur double CD.

Ce mode d'exécution présente donc les branches suivantes :

- une première branche B1 : U1, U2, SW1, M1, L (=L1 + LL), EO;
- une seconde branche B2 : EP, SW2, U1,
- une troisième branche B3 : U1, D1, M1, L, EO,
- une quatrième branche B4 : EP, D2, U1

Ces quatre branches avec leurs moyens de commutations SW1, SW2 permettant de produire quatre chemins avec quatre pentes de courant; à savoir ;

No 1) montée rapide : U1, U2, SW1, M1, L, GA, SW2

$$di/dt = (U1 + U2 - Ug)/L \quad (9)$$

No 2) montée lente : U2, SW1, M1, L, GA, D2 (SW2 étant bloqué)

$$di/dt = (U2 - Ug)/L \quad (10)$$

No 3) descente rapide : L, GA, D2, -U1, D1, M1 (SW1 et SW2 étant bloqués)

$$di/dt = (- U1 - Ug)/L \quad (11)$$

No 4) descente lente : L, GA, SW2, D1, M1 (SW1 étant bloqué)

$$di/dt = - Ug/L \quad (12).$$

L'énergie selfique excédentaire du circuit est renvoyée à la source U1 lors de la descente rapide.

Une pompe de courant PO bidirectionnelle permet d'échanger des charges entre les deux sources U1 et U2. Elle comprend à cet effet une première boucle P1 avec SW3 et L2 et une seconde boucle P2 avec L2 et D3 pour transférer l'énergie de la source U2 vers la source U1 et une troisième boucle P3 avec SW4 et L2 et une quatrième boucle P4 avec L2 et D4 pour transférer l'énergie de la source U1 vers la source U2.

Le générateur illustré à la figure 8 est une variante symétrique de celui de la figure 7. Cette variante se distingue du fait que la seconde source U2 est connectée par sa borne positive à la borne négative de la première source U1. Pour le reste des caractéristiques, le fonctionnement et les pentes de courant obtenues sont similaires à ceux du générateur de la figure 7. La séquence d'activation des commutateurs SW1 et SW2 peut être déduite sans peine par l'homme du métier.

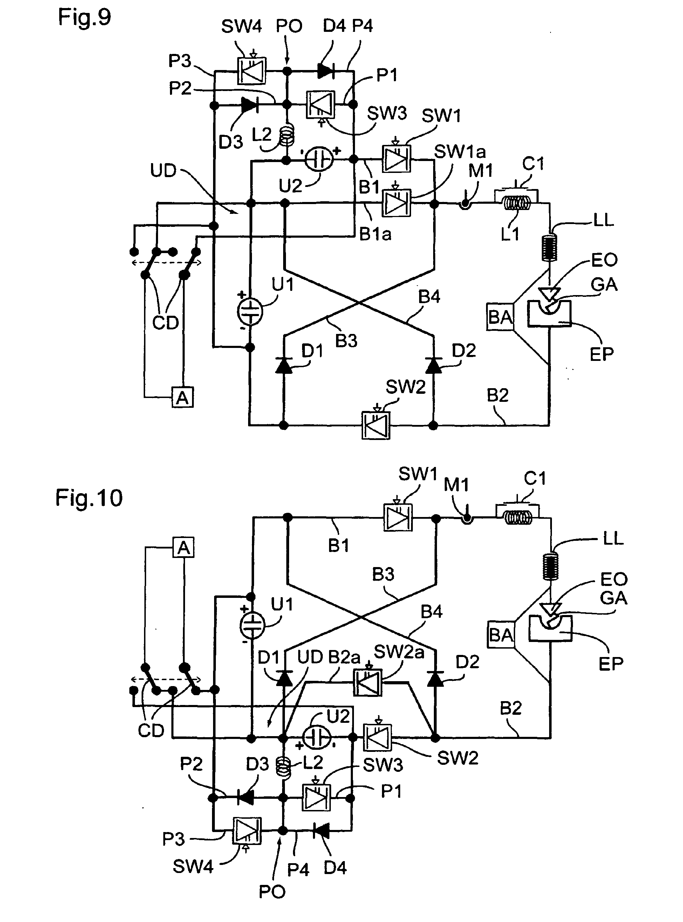

Le mode d'exécution représenté à la figure 9 est identique à celui de la figure 7 mis à part la présence d'une branche supplémentaire B1 a comportant un interrupteur SW1 a connecté en parallèle entre la borne négative de la seconde source U2 et la sortie de l'interrupteur SW1. Grâce à cette branche supplémentaire B1a, il est possible d'obtenir un chemin de courant supplémentaire, à savoir

No 1a) montée intermédiaire : U1, SW1a, M1, L, GA, SW2 (SW1 étant bloqué)

$$di/dt = (U1 - Ug)/L \quad (11)$$

La pente de ce chemin est donc intermédiaire entre celle des chemins de courant No 1) et No 2) du troisième mode d'exécution de la figure 7.

La variante illustrée à la figure 10 correspond de façon symétrique au mode d'exécution de la figure 9. Elle présente une branche supplémentaire B2a avec un interrupteur SW2a connecté en parallèle entre l'entrée de l'interrupteur SW2 et la borne positive de la seconde source U2. Grâce à cette branche supplémentaire, on obtient également une montée intermédiaire U1, SW1, M1, L, GA, SW2a (Sw2 étant bloqué) di/dt = (U1 - Ug)/L (11).

Par ailleurs cette variante correspond à la variante de la figure 8, mis à part la branche supplémentaire B2a.

Il est bien entendu que les modes d'exécution et variantes décrites ci-dessus ne présentent aucun caractère limitatif et qu'ils peuvent recevoir toutes modifications désirables à l'intérieur du cadre tel que défini par la revendication 1. En particulier, les circuits pourront présenter plus de quatre ou cinq branches permettant de varier encore davantage les pentes de courants, mais ceci au détriment de la simplicité du dispositif recherchée dans la présente demande.

D'autres composants électroniques et de contrôle pourront être ajoutés aux circuits décrits tel qu'un dispositif anti-court-circuit. Selon les applications, les pompes de courant des figures 5 à 10 pourront être du type unidirectionnel. Ces pompes de courant pourront présenter un circuit électronique différent.

## Revendications

1. Dispositif d'usinage par électroérosion comprenant un circuit électrique avec une source de tension (U1, U2) connectée à un réseau d'alimentation (A), agencé de façon à produire des impulsions de courant dans un circuit de charge comprenant une électrode-outil (EO) et une électrode-pièce (EP) constituant les pôles opposés d'une fente de travail (GA) en série avec au moins un élément de self-induction (L1, LL), **caractérisé par le fait que** le circuit électrique comprend la combinaison des caractéristiques suivantes :

   - une source double de tension (UD) comprenant une première (U1) et une seconde (U2) sources de tension reliées galvaniquement entre elles par un de leurs pôles,
   - ladite source double (UD) au moins quatre branches distinctes (B1 à B4) reliant au circuit de charge,
   - des moyens de commutation (SW1, SW2) pour produire par branchement sélectif desdites branches au moins deux pentes de courant croissantes et au moins deux pentes de courant décroissantes,
   - lesdites branches étant agencées pour que l'énergie de self-induction excédentaire du circuit électrique non consommée par les décharges érosives soit renvoyée à la source double (UD),
   - des moyens de transfert (PO) étant prévus pour effectuer un transfert d'énergie entre les deux sources de tension (U1, U2) de la source double (UD).

2. Dispositif selon la revendication 1, **caractérisé par le fait qu**'il comprend des moyens (C) pour connecter soit la première (U1), soit la seconde source de tension (U2) au réseau d'alimentation (A).

3. Dispositif selon la revendication 1 ou 2, **caractérisé par le fait que** le circuit électrique est de constitution générale en demi-pont comportant,

   - une première branche (B1) reliant le pôle positif de la source double (UD) par un premier interrupteur (SW1) à la fente de travail (GA),
   - une seconde branche (B2) reliant la fente de travail (GA) par un second interrupteur (SW2) au pôle négatif de la source double (UD),
   - une troisième branche (B3) reliant par l'intermédiaire d'un premier élément unidirectionnel (D1) la source double (UD) à une première borne du premier interrupteur (SW1) dirigée du côté de la fente de travail (GA),
   - une quatrième branche (B4) reliant par l'intermédiaire d'un second élément unidirectionnel (D2) une première borne du second interrupteur (SW2) dirigée du côté de la fente de travail (GA) à la source double (UD).

4. Dispositif selon la revendication 3, **caractérisé par le fait que** les première et seconde sources de tension (U1, U2) sont reliées l'une à l'autre par leurs pôles de même polarité formant un pôle commun.

5. Dispositif selon la revendication 4, **caractérisé par le fait qu'**un pôle de la seconde source (U2) non relié à la première source (U1) est connecté par l'intermédiaire d'un des éléments unidirectionnels (D2, D1) à la première borne de l'interrupteur (SW1, SW2) dont l'autre borne est reliée au pôle commun des deux sources pour former ladite troisième ou quatrième branche (B3, B4).

6. Dispositif selon la revendication 4, **caractérisé par le fait qu'**un pôle de la seconde source (U2) non relié à la première source (U1) est connecté par l'intermédiaire d'un des éléments unidirectionnels (D1, D2) à la première borne de l'interrupteur (SW1, SW2) dont une seconde borne est reliée au pôle de la première source (U1) qui n'est pas commun avec la seconde source (U2) pour former ladite troisième ou quatrième branche.

7. Dispositif selon la revendication 3, **caractérisé par le fait que** les première et seconde sources (U1, U2) sont reliées l'une à l'autre par leurs pôles de polarité opposée et **par le fait que** la seconde source (U2) est connectée en série dans la première ou seconde branche (B1, B2) à une seconde borne de l'un des interrupteurs (SW1, SW2) dirigée vers la première source (U1).

8. Dispositif selon la revendication 7, **caractérisé par le fait que** le circuit électrique comprend, connecté en parallèle avec la seconde source (U2) et l'interrupteur (SW1, SW2) relié à cette seconde source (U2), un interrupteur supplémentaire (SW1a, SW2a) qui est relié d'un côté aux pôles communs des première et seconde sources (U1, U2) et de l'autre côté à la première borne de cet interrupteur (SW1, SW2) dirigée du côté de la fente de travail (GA).

9. Dispositif selon l'une des revendications précédentes, **caractérisé par le fait que** lesdits moyens de transfert (PO) comprennent un premier circuit de transfert agencé pour transférer l'énergie de la seconde source (U2) vers la première source (U1) et **par le fait que** ce premier circuit de transfert comporte, d'une part, une première maille de courant (P1) composée par un accumulateur d'énergie (L2), un troisième interrupteur (SW3) et la seconde source (U2) et, d'autre part, une seconde maille de courant (P2) comprenant au moins ledit accumulateur d'énergie (L2), un troisième élément unidirectionnel (D3) et la première source (U1) montée en récepteur d'énergie, les première et seconde mailles (P1, P2) étant activées alternativement par la fermeture et l'ouverture du troisième interrupteur (SW3).

10. Dispositif selon l'une des revendications précédentes, **caractérisé par le fait que** lesdits moyens de transfert (PO) comprennent un second circuit de transfert agencé pour transférer l'énergie de la première source (U1) vers la seconde source (U2) et **par le fait que** ce second circuit de transfert comporte, d'une part, une troisième maille de courant (P3) comprenant au moins un accumulateur d'énergie (L2), un quatrième interrupteur (SW4) et la première source (U1) et, d'autre part, une quatrième maille de courant (P4) composée par ledit accumulateur d'énergie (L2), un quatrième élément unidirectionnel (D4) et la seconde source (U2) montée en récepteur d'énergie, les troisième et quatrième mailles (P3, P4) étant activées alternativement par la fermeture et l'ouverture du quatrième interrupteur (SW4).

11. Dispositif selon les revendications 9 et 10, **caractérisé par le fait que** ledit accumulateur d'énergie (L2) est commun aux premier et second circuits de transfert.

## Claims

1. Device for machining by electroerosion, comprising an electrical circuit with a voltage source (U1, U2) connected to a supply network (A), arranged to produce current impulses in a load circuit comprising an electrode-tool (EO) and an electrode-workpiece (EP) constituting opposite poles of a working gap (GA) in series with at least one self-induction element (L1, LL), **characterized by** the fact that the electrical circuit comprises the combination of the following characteristics:

    - a double voltage source (UD) comprising a first (U1) and a second (U2) voltage source connected galvanically together by one of their poles,
    - at least four separate branches (B1 to B4) connecting said double source (UD) to the load circuit,
    - switching means (SW1, SW2) to produce by selective connection of said branches, at least two slopes of increasing current and at least two slopes of decreasing current,
    - said branches being arranged such that the excess self-induction energy of the electrical circuit not consumed by the erosive discharges will be returned to the double source (UD),
    - transfer means (PO) being provided to effect a transfer of energy between the two voltage sources (U1, U2) of the double source (UD).

2. Device according to claim 1, **characterized by** the fact that it comprises means (C) to connect either the first (U1) or the second (U2) voltage source to the supply network (A).

3. Device according to claim 1 or 2, **characterized by** the fact that the electrical circuit is of general half-bridge construction comprising,

- a first branch (B1) connecting the positive pole of the double source (UD) by a first switch (SW1) to the working gap (GA),
- a second branch (B2) connecting the working gap (GA) by a second switch (SW2) to the negative pole of the double source (UD),
- a third branch (B3) connecting by means of a first unidirectional element (D1) the double source (UD) to a first terminal of the first switch (SW1) directed on the side of the working gap (GA),
- a fourth branch (B4) connecting by means of a second unidirectional element (D2) a first terminal of the second switch (SW2) directed on the side of the working gap (GA) to the double source (UD).

**4.** Device according to claim 3, **characterized by** the fact that the first and second voltage sources (U1, U2) are connected to each other by their poles of the same polarity, forming a common pole.

**5.** Device according to claim 4, **characterized by** the fact that one pole of the second source (UD) not connected to the first source (U1) is connected by means of one of the unidirectional elements (D2, D1) to the first terminal of the switch (SW1, SW2) whose other terminal is connected to the common pole of the two sources to form said third or fourth branch (B3, B4).

**6.** Device according to claim 4, **characterized by** the fact that one pole of the second source (U2) not connected to the first source (U1) is connected by means of one of the unidirectional elements (D1, D2) to the first terminal of the switch (SW1, SW2) of which a second terminal is connected to the pole of the first source (U1) which is not common to the second source (U2) to form said third or fourth branch.

**7.** Device according to claim 3, **characterized by** the fact that the first and second sources (U 1, U2) are connected to each other by their poles of opposed polarity and by the fact that the second source (US) is connected in series in the first or second branch (B1, B2) to a second terminal of one of the switches (SW1, SW2) directed toward the first source (U1).

**8.** Device according to claim 7, **characterized by** the fact that the electrical circuit comprises, connected in parallel with the second source (U2) and the switch (SW1, SW2) connected to this second source (U2), a supplemental switch (SW1a, SW2a) which is connected on one side to the common poles of the first and second sources (U1, U2) and on the other side to the first terminal of this switch (SW1, SW2) directed on the side of the working gap (GA).

**9.** Device according to one of the preceding claims, **characterized by** the fact that said transfer means (PO) comprise a first transfer circuit arranged to transfer the energy of the second source (U2) to the first source (U1) and by the fact that this first transfer circuit comprises, on the one hand, a first current mesh (P1) comprised by an energy accumulator (L2), a third switch (SW3) and a second source (U2) and, on the other hand, a second current mesh (P2) comprising at least said energy accumulator (L2), a third unidirectional element (D3) and the first source (U1) mounted as an energy receiver, the first and second meshes (P1, P2) being actuated alternatively by the closing and opening of the third switch (SW3).

**10.** Device according to one of the preceding claims, **characterized by** the fact that said transfer means (PO) comprise a second transfer circuit arranged to transfer the energy of the first source (U1) toward the second source (U2) and by the fact that this second transfer circuit comprises, on the one hand, a third current mesh (P3) comprising at least one energy accumulator (L2), a fourth switch (S4) and the first source (U1) and, on the other hand, a fourth current mesh (P4) comprised by said energy accumulator (L2), a fourth unidirectional element (D4) and a second source (U2) mounted as an energy receiver, the third and fourth meshes (P3, P4) being actuated alternatingly by the closing and opening of the fourth switch (SW4).

**11.** Device according to claims 9 and 10, **characterized by** the fact that said energy accumulator (L2) is common to the first and second transfer circuits.

**Patentansprüche**

**1.** Funkenerosionsmaschine, einen elektrischen Schaltkreis mit einer an ein Stromversorgungsnetz (A) angeschlossenen Spannungsquelle (U1, U2) umfassend und so eingerichtet, dass Stromimpulse in einem Ladekreis erzeugt werden, der in Reihe mit zumindest einem Selbstinduktionselement (L1, LL) eine Werkzeugelektrode (EO) und eine Werkstückelektrode (EP) umfasst, die die entgegengesetzten Pole eines Arbeitsspalts (GA) darstellen, **dadurch gekennzeichnet, dass** der elektrische Schaltkreis die Kombination der folgenden Eigenschaften umfasst:

- eine doppelte Spannungsquelle (UD), eine erste (U1) und eine zweite (U2) Spannungsquelle umfassend, die über einen ihrer Pole galvanisch miteinander verbunden sind,
- zumindest vier getrennte Zweige (B1 bis B4), die die doppelte Quelle (UD) mit dem Ladekreis verbinden,

- Umschaltorgane (SW1, SW2), um durch selektiven Abgriff der Zweige zumindest zwei ansteigende Stromgradienten und zumindest zwei fallende Stromgradienten zu erzeugen,
- wobei die Zweige dafür eingerichtet sind, dass die überschüssige Selbstinduktionsenergie des elektrischen Schaltkreises, die durch die erosiven Entladungen nicht verbraucht worden ist, zur doppelten Quelle (UD) zurückgeleitet wird,
- Übertragungsorgane (PO) vorgesehen sind, um eine Energieübertragung zwischen den beiden Spannungsquellen (U1, U2) der doppelten Quelle zu bewirken.

2. Maschine nach Anspruch 1, **dadurch gekennzeichnet, dass** sie Mittel (C) umfasst, um entweder die erste (U1) oder die zweite (U2) Spannungsquelle an das Versorgungsnetz (A) anzuschliessen.

3. Maschine nach Anspruch 1 oder 2, **dadurch gekennzeichnet, dass** der elektrische Schaltkreis den allgemeinen Aufbau einer Halbbrücke besitzt, die aufweist:

- einen ersten Zweig (B1), der den positiven Pol der doppelten Quelle (UD) über einen ersten Unterbrecher (SW1) mit dem Arbeitsspalt (GA) verbindet,
- einen zweiten Zweig (B2), der den Arbeitsspalt (GA) über einen zweiten Unterbrecher (SW2) mit dem negativen Pol der doppelten Quelle (UD) verbindet,
- einen dritten Zweig (B3), der die doppelte Quelle (UD) über ein erstes einseitig gerichtetes Element (D1) mit einer ersten Klemme des ersten Unterbrechers (SW1), die zur Seite des Arbeitsspaltes (GA) hin gerichtet ist, verbindet,
- einen vierten Zweig (B4), der eine erste Klemme des zweiten Unterbrechers (SW2), die zur Seite des Arbeitsspaltes (GA) hin gerichtet ist, über ein zweites einseitig gerichtetes Element (D2) mit der doppelten Quelle verbindet.

4. Maschine nach Anspruch 3, **dadurch gekennzeichnet, dass** die erste und zweite Spannungsquelle (U1, U2) miteinander über ihre Pole gleicher Polarität verbunden sind, die einen gemeinsamen Pol bilden.

5. Maschine nach Anspruch 4, **dadurch gekennzeichnet, dass** ein Pol der zweiten Quelle (U2), der nicht mit der ersten Quelle (U1) verbunden ist, über eines der einseitig gerichteten Elemente (D2, D1) mit der ersten Klemme des Unterbrechers (SW1, SW2) verbunden ist, dessen andere Klemme mit dem gemeinsamen Pol der beiden Quellen verbunden ist, um den dritten oder vierten Zweig (B3, B4) zu bilden.

6. Maschine nach Anspruch 4, **dadurch gekennzeichnet, dass** ein Pol der zweiten Quelle (U2), der nicht mit der ersten Quelle (U1) verbunden ist, über eines der einseitig gerichteten Elemente (D1, D2) mit der ersten Klemme des Unterbrechers (SW1, SW2) verbunden ist, dessen zweite Klemme mit dem Pol der ersten Quelle (U1) verbunden ist, der nicht mit der zweiten Quelle (U2) gemeinsam ist, um den dritten oder vierten Zweig zu bilden.

7. Maschine nach Anspruch 3, **dadurch gekennzeichnet, dass** die erste und zweite Quelle (U1, U2) miteinander über ihre Pole entgegengesetzter Polarität verbunden sind, und **dadurch**, dass die zweite Quelle (U2) im ersten oder zweiten Zweig (B1, B2) in Reihe mit einer zweiten Klemme des einen Unterbrechers (SW1, SW2) verbunden ist, die zur ersten Quelle (U1) hin gerichtet ist.

8. Maschine nach Anspruch 7, **dadurch gekennzeichnet, dass** der elektrische Schaltkreis in Parallelschaltung mit der zweiten Quelle (U2) und dem mit dieser zweiten Quelle (U2) verbundenen Unterbrecher (SW1, SW2) einen zusätzlichen Unterbrecher (SW1a, SW2a) umfasst, der einerseits mit den gemeinsamen Polen der ersten und zweiten Quelle (U1, U2) und andererseits mit der ersten Klemme dieses Unterbrechers (SW1, SW2) verbunden ist, die zum Arbeitsspalt (GA) hin gerichtet ist.

9. Maschine nach einem der vorangehenden Ansprüche, **dadurch gekennzeichnet, dass** die Übertragungsmittel (PO) eine erste Übertragungsschaltung umfassen, die dafür eingerichtet ist, die Energie der zweiten Quelle (U2) zur ersten Quelle (U1) zu übertragen, und **dadurch**, dass diese erste Übertragungsschaltung einerseits eine erste Strommasche (P1), die aus einem Energiesammler (L2), einem dritten Unterbrecher (SW3) und der zweiten Quelle (U2) besteht, und andererseits eine zweite Strommasche (P2) umfasst, die zumindest den Energiesammler (L2), ein drittes einseitig gerichtetes Element (D3) und die erste Quelle umfasst, die als Energieempfänger geschaltet ist, wobei die erste und zweite Masche (P1, P2) abwechselnd durch Schliessen und Öffnen des dritten Unterbrechers (SW3) aktiviert werden.

10. Maschine nach einem der vorangehenden Ansprüche, **dadurch gekennzeichnet, dass** die Übertragungsmittel (PO) eine zweite Übertragungsschaltung umfassen, die dafür eingerichtet ist, die Energie von der ersten Quelle (U2) zur zweiten Quelle (U2) zu übertragen, und **dadurch**, dass diese zweite Übertragungsschaltung einerseits eine dritte Strommasche (P3), die zumindest einen Energiesammler (L2), einen vierten Unterbrecher (SW4) und die erste Quelle (U1) umfasst, und andererseits eine vierte Strommasche (P4) umfasst, die aus dem Energiesammler (L2), einem vierten einseitig gerichteten Element (D4) und der zweiten Quelle (U2) besteht, die als Energieempfänger geschaltet ist, wobei die dritte und vierte Masche (P3, P4) abwechselnd durch Schliessen und Öffnen des vierten Umschalters (SW4) aktiviert werden.

**11.** Maschine nach Ansprüchen 9 und 10, **dadurch gekennzeichnet, dass** der Energiesammler (L2) der ersten und zweiten Übertragungsschaltung gemeinsam ist.

Fig.1

Cp
B1
SW1
M1
C1
L1
LL
D1
P3
P2
SW4
EO
GA
C
D3
B3
BA
U1
L2
EP
A
SW3
B4
P4
D2
U2
D4
UD
P1
PO
B2
SW2

Fig.2

Cp
B1
SW1
M1
C1
LL
L1
D1
EO
B3
GA
C
D3
P2
BA
EP
U1
L2
SW3
B4
A
U2
D2
UD
P1
PO
B2
SW2

Fig.3
UD
PO
SW1
B1
M1
C1
LL
Cp
P1
SW3
U2
L1
D1
B3
EO
GA
B4
U1
A
D4
L2
BA
Ep
P4
P2
P3
D3
SW4
D2
C
B2
SW2

Fig.4
UD
PO
SW1
B1
M1
C1
LL
Cp
P1
SW3
U2
L1
D1
B3
EO
GA
B4
U1
A
L2
BA
Ep
P2
D3
D2
C
B2
SW2

Fig.5

B1
SW1
M1
C1
Cp
LL
L1
D1
P3
B3
EO
C
P2
SW4
GA
L2
BA
D3
A
U1
P4
EP
B4
D2
SW3
D4
U2
UD
P1
PO
B2
SW2

Fig.6

UD
PO
SW1
B1
M1
C1
Cp
LL
P1
L1
SW3
D1
U2
B3
EO
GA
D4
P4
B4
BA
A
L2
U1
EP
P3
P2
D2
SW4
C
B2
SW2

Fig.7
PO
SW4
D4
P4
P3
P1
D3
P2
SW1
M1
C1
SW3
L2
B1
L1
LL
U2
UD
EO
GA
U1
CD
BA
B3
B4
D2
EP
D1
A
B2
SW2
Fig.8
SW1
M1
C1
B1
L1
LL
A
B3
EO
U1
B4
GA
BA
D1
D2
EP
UD
U2
SW2
B2
CD
D3
L2
SW3
P2
P1
P3
SW4
P4
D4
PO

Fig.9

Fig.10

SW4
PO
D4
P4
P3
P1
P2
SW3
SW1
D3
L2
SW1a
UD
M1
C1
U2
B1
B1a
L1
LL
EO
U1
GA
B4
BA
CD
B3
EP
D1
D2
SW2
B2
A
SW1
M1
C1
A
B1
LL
B3
EO
GA
U1
B4
BA
EP
D1
UD
B2a
SW2a
D2
CD
U2
B2
SW3
SW2
P2
D3
L2
SW3
P1
P3
SW4
P4
D4
PO